# FASCICULE DE BREVET EUROPEEN

(11) **EP 2 216 245 B1**
(45) Date de publication et mention de la délivrance du brevet: **22.04.2015**
(21) Numéro de dépôt: 10152399.1
(22) Date de dépôt: 02.02.2010
(51) Int. Cl.: B64C 13/50, B64C 13/24, B64C 13/42, G05D 1/00

(54) **Système de commande de vol et aéronef le comportant**
Flugregelungssystem und mit diesem ausgerüstetes Luftfahrzeug
Flight-control system and aircraft comprising same

(30) Priorité: 10.02.2009 FR 0950831
(43) Date de publication de la demande: 11.08.2010
(73) Titulaire: Airbus Operations, 31060 Toulouse (FR); Centre National de la Recherche Scientifique (CNRS), 75794 Paris Cedex 16 (FR)
(72) Inventeur: Sghairi, Manel, 31200, Toulouse (FR); Brot, Patrice, 31520, Ramonville Saint-Agne (FR); Aubert, Jean-Jacques, 31820, Pibrac (FR); De Bonneval, Agnan, 31670, LABEGE (FR); Crouzet, Yves, 31520, Ramonville Saint Agne (FR)
(74) Mandataire: Santarelli

(56) Documents cités:
- EP-A- 0 754 990
- WO-A-02/06116
- WO-A-2007/018652
- WO-A-2007/094808
- US-A- 4 115 847
- US-A1- 2005 085 957

## Description

La présente invention concerne les systèmes de commande de vol (Flight Control Systems) présents dans les aéronefs.

Un tel système est connu de WO2007/094808, qui est considéré comme l'art antérieur le plus proche et décrit les caractéristiques du préambule de la revendication 1.

Ces systèmes de commande de vol sont à l'interface entre les organes de pilotage (manche, palonnier, etc.) et les diverses surfaces de vol mobiles de l'aéronef (tels que les gouvernes de direction, de profondeur, les ailerons, les stabilisateurs, etc.).

Les avions de ligne modernes possèdent des systèmes de commande de vol de type « *fly by wire »* dans lesquels les actions mécaniques sur les organes de pilotage sont converties en des signaux transmis à des actionneurs commandant le déplacement des surfaces de vol, ces ordres étant transmis aux actionneurs par des calculateurs évolués.

Ces ordres sont calculés selon plusieurs types de lois. L'une de ces lois, appelée loi normale, est une loi de pilotage assistée qui retraite les consignes de pilotage fournies par les organes de pilotage pour optimiser les conditions de pilotage (confort des passagers, stabilisation de l'avion, protection du domaine de vol, etc.). Une autre loi, dite loi directe, est une loi qui ne fait que retranscrire les instructions de déplacement de l'avion transmises par les commandes de vol électriques sans retraitement de ces signaux visant à améliorer les performances de pilotage.

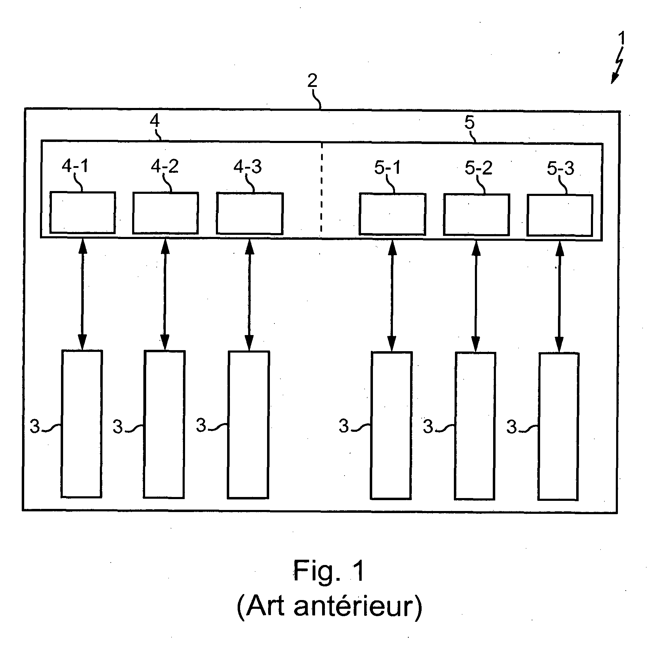

On connaît déjà, comme illustré sur la figure 1, un système de commande de vol 1 comportant un module de commande 2 présentant deux ensembles de calculateurs 4 et 5 afin de déterminer les ordres de commande à transmettre à des actionneurs 3.

L'ensemble 4 comporte deux calculateurs 4-1 et 4-2 en mesure de calculer la commande des actionneurs 3 établie selon les lois de commande normale et directe (ces calculateurs sont appelés calculateurs primaires) et un calculateur 4-3 uniquement en mesure de calculer cette commande établie selon la loi directe (ce calculateur est appelé calculateur secondaire).

L'ensemble 5 comporte un calculateur primaire 5-1 et deux calculateurs secondaires 5-2 et 5-3.

Tous ces calculateurs sont installés en baie avionique et communiquent avec les actionneurs via des liaisons directes point à point analogiques.

Les actionneurs sont reliés à un ou deux calculateurs, avec dans le cas de deux calculateurs une architecture « maître/attente », le calculateur maître s'assure de la validité du signal de commande transmis à l'actionneur ce qui assure l'intégrité du dispositif. Lorsque le calculateur maître tombe en panne, le calculateur « en attente » prend le relais ce qui assure qu'un calculateur est toujours disponible.

Pour s'assurer de la validité de son ordre, chaque calculateur présente une structure à double unité de calculs (il s'agit de calculateurs double-voie encore appelés calculateurs « duplex »), non illustrée sur la figure 1.

La première unité est une unité de commande (COM) qui met en oeuvre les traitements nécessaires à la réalisation des fonctions du calculateur, à savoir déterminer un signal de commande vers un actionneur.

La seconde unité est une unité de surveillance ou de monitorage (MON) qui effectue de son côté les mêmes types d'opérations, les valeurs obtenues par chaque unité étant ensuite comparées et, s'il y a un écart qui dépasse le seuil de tolérance autorisé, le calculateur est automatiquement désactivé. Il devient alors inopérant et est déclaré en panne pour qu'un autre calculateur puisse s'y substituer pour mettre en oeuvre les fonctions délaissées par ce calculateur en panne.

Chaque calculateur est ainsi prévu pour détecter ses propres pannes et inhiber les sorties correspondantes tout en signalant son état.

Le matériel des calculateurs primaires et secondaires est différent de façon à minimiser les risques de défaillance simultanée de l'ensemble des calculateurs (dissimilarité matérielle).

De plus, le matériel des deux voies (COM et MON) de chaque calculateur est identique mais pour des raisons de sécurité, les logiciels de ces deux voies sont différents de façon à assurer une dissimilarité logicielle.

L'invention vise à fournir un système de commande de vol qui présente une architecture modifiée par rapport à celle de l'art antérieure décrite ci-dessus, à la fois moins coûteuse en ressources matérielles et logicielles tout en répondant aux mêmes exigences de sécurité et de disponibilité que le système de l'art antérieur.

Elle propose à cet effet un système de commande de vol pour aéronef comportant :
- au moins un actionneur d'une surface de vol mobile dudit aéronef ;
- un module de commande de vol en communication avec ledit actionneur, ledit module comportant au moins un premier et un deuxième calculateur, chaque calculateur étant adapté à calculer un ordre de commande établi selon au moins une loi de commande prédéterminée de ladite surface de vol ; caractérisé en ce que ledit actionneur comporte des moyens logiques adaptés à comparer les ordres desdits calculateurs et à déterminer à partir de ces ordres l'action à exécuter sur ladite surface mobile.

Dans le système selon l'invention, la comparaison des ordres des calculateurs ne s'effectue plus au niveau de ces calculateurs mais au niveau de chaque actionneur.

Chaque actionneur est ainsi en mesure de déterminer par lui-même, à partir des ordres calculateurs qui lui sont transmis, l'action à exécuter sur la surface mobile de vol (c'est à dire l'amplitude de déplacement de cette surface).

Il est ainsi également en mesure, grâce aux moyens logiques qu'il comporte, de déterminer sur quels ordres se baser pour définir l'action à exécuter et de rejeter les ordres dont la comparaison avec les autres ordres montrent qu'ils présentent une anomalie.

L'étape de détermination de l'action à exécuter étant déportée au niveau de l'actionneur, ceci permet également de réaliser des calculateurs plus simples et moins coûteux tout en offrant une plus grande flexibilité pour l'agencement du système.

Ceci permet en particulier de s'affranchir des architectures « COM/MON » et « maître/attente » de l'art antérieur (ce qui minimise significativement le nombre total de calculateurs) tout en conservant un haut niveau de sécurité.

Selon des caractéristiques obligatoires :
- lesdits moyens logiques présentent une architecture à vote ; et/ou
- ledit premier calculateur appartient à un premier groupe de calculateurs, ledit deuxième calculateur appartient à un deuxième groupe de calculateurs et ladite architecture à vote présente un premier niveau de vote pour chaque dit groupe et un second niveau de vote en sortie des deux dits groupes.

La détermination de l'action à exécuter par une architecture à vote permet de déterminer de façon fiable cette action sans que cela ne nécessite davantage de ressources matérielles et logicielles. Selon d'autres caractéristiques optionnelles :
- les moyens logiques dudit actionneur sont également adaptés, pour chaque calculateur, à renvoyer ou non un message de défaillance en fonction du résultat de ladite comparaison des ordres ; et/ou
- ledit système comporte une pluralité d'actionneurs et lesdits calculateurs sont adaptés à se désactiver lorsqu'un nombre d'actionneurs supérieur à un nombre prédéterminé renvoie ledit message de défaillance.

Les actionneurs étant en mesure de comparer les ordres des calculateurs entre eux, ils sont capables de détecter quels calculateurs sont défaillants et de leur renvoyer un message pour les en informer.

Dans le système selon l'invention, les fonctions remplies par l'unité MON des calculateurs à structure duplex de l'art antérieur sont ainsi mises en oeuvre par les actionneurs conjointement avec les autres calculateurs grâce à quoi il est rendu possible d'utiliser des calculateurs qui ne présentent qu'une seule voie (calculateurs dits « simplex », c'est-à-dire dépourvus de processeurs redondants) au lieu de deux (calculateurs « duplex »).

Selon d'autres caractéristiques optionnelles, lesdits moyens logiques de chaque actionneur sont également adaptés, lorsque tous les calculateurs encore opérationnels calculent ledit ordre de commande selon un même programme, à envoyer une requête en reconfiguration logicielle vers l'un des calculateurs encore opérationnels pour qu'il fonctionne selon un programme différent de celui des autres calculateurs encore opérationnels.

La reconfiguration logicielle permet de maximiser l'utilisation de chaque calculateur ce qui contribue à minimiser le nombre total de calculateurs tout en conservant, pour une même loi de commande une dissimilarité logicielle entre calculateurs. Selon encore d'autres caractéristiques optionnelles :
- chaque actionneur comporte une unité de commande et une unité de surveillance de ladite unité de commande ;
- chaque unité est reliée audit premier calculateur et audit deuxième calculateur ; et/ou
- l'une des unités est uniquement reliée audit premier calculateur et l'autre unité est uniquement reliée audit deuxième calculateur, lesdites unités de commande et de surveillance étant également reliées entre elles.

La mise en relation des unités de commande et de surveillance des actionneurs avec les ensembles de calculateurs peut ainsi s'opérer directement ou indirectement (par l'intermédiaire de l'autre unité).

L'invention vise également sous un deuxième aspect un aéronef équipé d'un système tel qu'exposé ci-dessus.

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une représentation schématique d'un système de commande de vol selon l'art antérieur décrit précédemment ;
- la figure 2 est une vue schématique d'un système de commande de vol selon l'invention ;
- la figure 3 est une vue détaillant le réseau de communication permettant le transfert d'information des ensembles de calculateurs que comportent le système selon l'invention vers les actionneurs de ce système ; et
- la figure 4 est une vue similaire à la figure 3 mais pour une variante du réseau de communication.

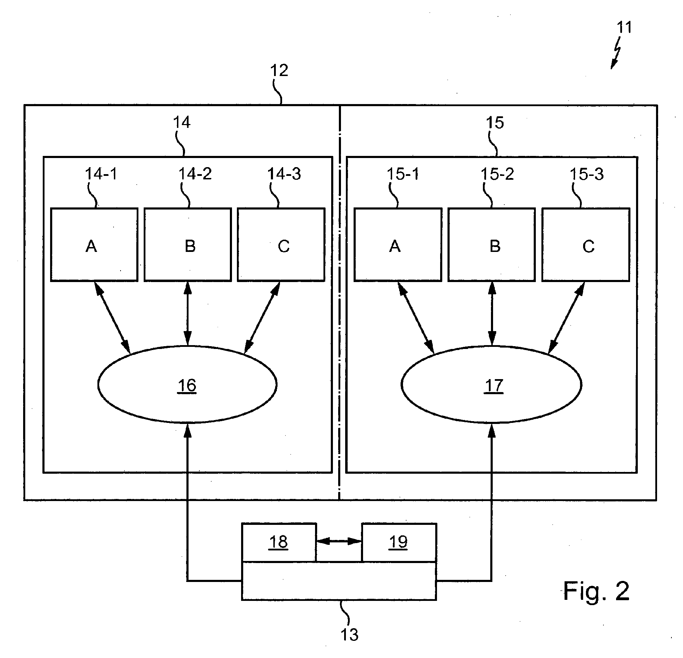

Le système de commande de vol selon l'invention 11 illustré sur la figure 2 présente un module de commande 12 pour transmettre des ordres à une pluralité d'actionneurs 13.

Le module de commande 12 comporte six calculateurs « simplex » (ils ne présentent qu'une seule voie et un seul processeur de calcul) répartis en deux ensembles 14 et 15 de trois calculateurs, chaque ensemble étant relié à chaque actionneur 13.

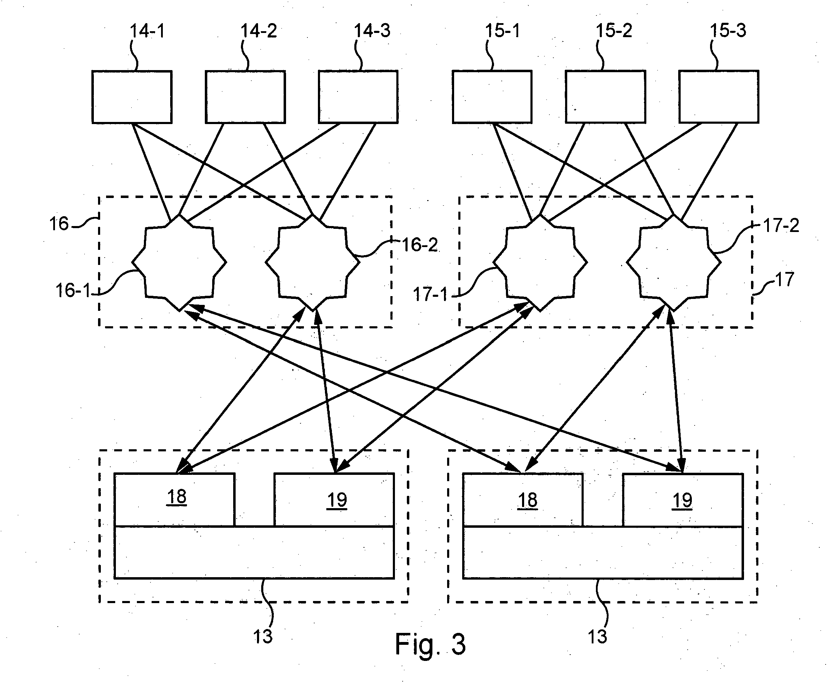

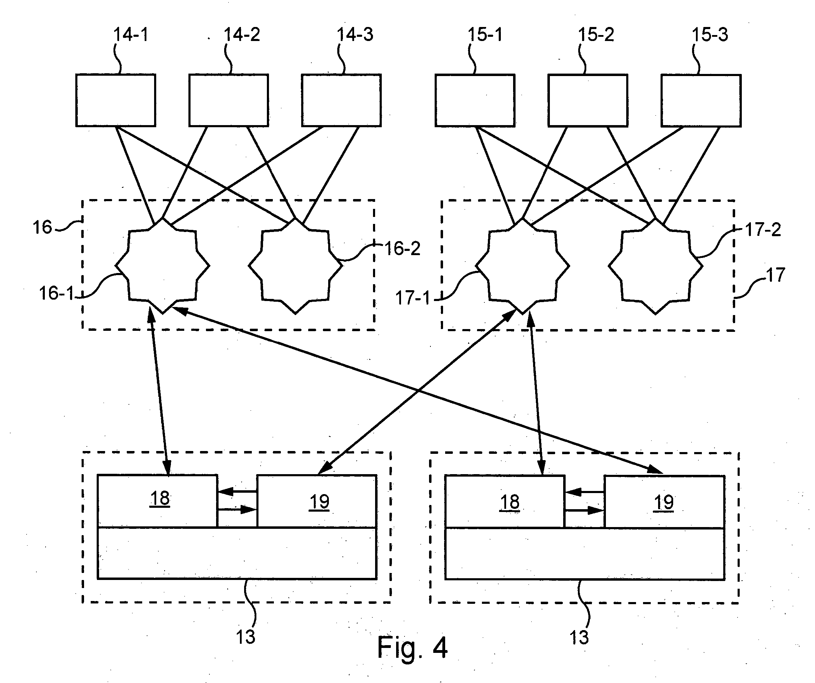

L'ensemble de calculateurs 14 (respectivement 15) communique avec les actionneurs 13 par un organe numérique d'échange de données 16 (respectivement 17) dont on exposera ci-après la structure en détail à l'aide des figures 3 et 4.

L'ensemble de calculateurs 14 (respectivement 15) comporte deux calculateurs primaires 14-1 et 14-2 (respectivement 15-1 et 15-2) permettant de calculer les ordres de commande selon la loi normale et selon la loi directe ainsi qu'un calculateur secondaire 14-3 (respectivement 15-3) pour calculer les ordres de commande à partir de la loi directe uniquement.

Les calculateurs primaires et secondaires sont de conception matérielle différente afin de répondre aux exigences de sécurité (dissimilarité matérielle).

Les calculateurs primaires 14-1 et 14-2 (respectivement 15-1 et 15-2) fonctionnent avec deux variantes de programmes A et B pour le calcul selon les lois normale et directe qui sont différentes l'une de l'autre tandis que le calculateur 14-3 (respectivement 15-3) fonctionne pour le calcul selon la loi directe avec une variante de programme C différente des variantes A et B.

Ainsi le calcul selon la loi normale est obtenu par deux programmes différents (A et B) tandis que le calcul selon la loi directe est également obtenu par deux programmes différents (B et C ou A et C ou A et B). La dissimilarité logicielle est donc bien assurée pour la détermination des signaux de commande ce qui assure un haut niveau de sécurité.

Comme on le verra ci-après, chaque calculateur est reconfigurable à chaud en fonction des défaillances.

Ces ensembles de calculateurs sont localisés en baie avionique (la baie avionique est l'espace dans lequel sont regroupés la majeure partie des équipements électroniques d'un avion, en général situé sous l'espace utile de l'avion) et sont alimentés par deux systèmes électriques séparés.

Chaque actionneur 13 comporte deux voies 18 et 19 (voie COM et voie MON) connectées aux deux ensembles de calculateurs 14 et 15 de sorte que chaque actionneur communique par ses voies 18 et 19 avec tous les calculateurs.

La voie 18 (unité de commande COM) réalise les fonctions de vote et de sélection et la voie 19 (unité de surveillance MON) de son côté effectue les mêmes types d'opérations pour que à la sortie les valeurs obtenues par chaque unité soient comparées et, en cas de désaccord, l'actionneur soit désactivé.

Selon l'architecture logique des actionneurs 13, dite architecture à vote massif, tous les calculateurs (primaires et secondaires) des deux ensembles de calculateurs 14 et 15 calculent les lois de pilotage pour générer les ordres de commande des surfaces de vol mobiles. A chaque cycle, chaque calculateur calcule les consignes pour tous les actionneurs valides, et transmet les ordres via les organes 16 et 17 vers toutes les unités 18 et 19 de tous les actionneurs et ceci indépendamment de la validité des ordres calculés par chaque calculateur.

Dans l'exemple illustré, chaque actionneur 13 reçoit donc par ensemble de calculateurs deux ordres pour la loi normale (provenant des calculateurs 14-1 et 14-2 pour l'ensemble 14 et des calculateurs 15-1 et 15-2 pour l'ensemble 15) et trois ordres pour la loi directe (provenant des calculateurs 14-1 à 14-3 pour l'ensemble 14 et des calculateurs 15-1 à 15-3 pour l'ensemble 15), de sorte que, avant la première panne, chaque actionneur 13 dispose de quatre consignes pour la loi normale et de six consignes pour la loi directe.

A partir de l'ensemble de ces consignes, les deux unités 18 et 19 de chaque actionneur 13 effectuent des opérations de vote.

L'algorithme de vote est basé sur les ordres des calculateurs et est implémenté dans chaque unité 18 et 19 de chaque actionneur.

Selon un premier niveau, cet algorithme met en oeuvre un premier vote (vote explicite) qui détermine pour chaque ensemble de calculateurs, à partir des différents signaux fournis par les calculateurs (trois pour la loi directe et deux pour la loi normale), quel est le nombre de résultats fournis par les différents calculateurs qui sont acceptables (poids ou facteur de confiance du vote).

Ces résultats sont considérés comme acceptables lorsqu'ils sont compris dans un seuil prédéterminé S par rapport à la valeur votée V qui est la médiane des trois ordres reçus (dans le cas de trois ordres) ou la moyenne des deux ordres reçus (dans le cas de deux ordres), la valeur de seuil S étant déterminée préalablement.

Le nombre de résultats acceptables définit un poids P ou facteur de confiance qui indique le nombre des unités qui sont en accord.

Selon un second niveau, et dans le cas où le vote explicite d'un ensemble de calculateurs n'est plus capable de fournir un résultat avec un poids P supérieur ou égal à 2, l'algorithme met alors en oeuvre un vote sélectif pour faire intervenir dans le processus les calculateurs permettant d'avoir le maximum de variantes de logiciel distinctes (A, B ou C), soit deux ou trois variantes distinctes et dans l'espoir d'obtenir au final un poids au moins égal à deux.

Ainsi, si par exemple le voteur explicite de l'ensemble 15 a un poids strictement inférieur à deux (de sorte que le résultat du vote explicite de l'ensemble 15 n'est pas utilisable), et si pour l'ensemble 14 l'un des calculateurs est indisponible (par exemple le calculateur 14-3), alors l'information utilisée par le processus de choix final, au titre de l'ensemble 15, est celle émanant du calculateur de l'ensemble 15 présentant la même configuration logicielle que le calculateur indisponible de l'ensemble 14 (soit donc le calculateur 15-3 dans l'exemple). De même si les calculateurs 14-1 et 14-2 sont indisponibles, ce seront les calculateurs 15-1 et 15-2 qui seront pris en compte dans le processus de choix final, au titre de l'ensemble 15.

Chaque actionneur est ainsi en mesure de réaffecter chaque calculateur d'un ensemble à l'autre ensemble. ce processus sélectif de vote permettant ainsi d'utiliser au maximum la disponibilité des calculateurs.

Enfin la dernière étape consiste à prendre en compte les valeurs votées provenant des deux ensembles de la façon suivante :
- si pour chaque ensemble l'ordre n'est transmis que par un seul calculateur et si ces ordres sont transmis avec le même poids, l'ordre final est la demi-somme des ordres provenant de chaque ensemble, et sinon l'ordre final est égal à l'ordre de l'ensemble qui a le poids le plus élevé ;
- si pour un des ensembles l'ordre est transmis par deux calculateurs et si pour l'autre ensemble l'ordre n'est transmis que par un seul calculateur, le résultat final est la valeur médiane des trois valeurs avec au moins deux valeurs qui doivent être cohérentes (sauf si le poids de l'un des deux ensembles est déjà égal à deux auquel cas l'autre ensemble est ignoré) ;
- si pour chaque ensemble l'ordre est transmis par deux calculateurs, le résultat final est issu du vote de ces quatre valeurs avec deux valeurs au moins qui doivent être cohérentes ; et
- sinon l'ordre est indisponible.

Cet ordre ainsi déterminé va être exécuté par l'actionneur pour faire se déplacer la surface mobile de la quantité désirée, l'actionneur choisissant la loi normale si l'ordre pour la loi normale est disponible, ou la loi directe si l'ordre pour la loi normale est indisponible mais que l'ordre pour la loi directe est disponible. Si aucun ordre n'est disponible, l'actionneur se désactive (mode amorti).

Par ailleurs, un actionneur qui détecte un calculateur au comportement erroné pendant un certain temps (c'est-à-dire si son ordre n'est pas compris dans le seuil S) écarte celui-ci de son processus de vote de façon permanente.

L'unité 18 transmet le résultat de son vote vers l'unité 19 qui est associée ainsi que vers tous les calculateurs en indiquant la valeur qu'elle a sélectionnée ainsi que les adresses des calculateurs qui ont calculé un ordre considéré égal à cette valeur (au seuil près).

Si les unités 18 et 19 sont en accord sur la valeur votée, l'unité 19 transmet alors les mêmes informations que l'unité 18 vers tous les calculateurs alors que si cette unité est en désaccord avec l'unité 18, celle-ci la bloque et l'actionneur est déclaré en panne, une information de non-validité de l'actionneur étant transmise à tous les calculateurs.

Chaque calculateur reçoit également le retour de toutes les unités 18 et 19 de tous les actionneurs. Elle attend ce retour d'informations pour connaître la validité de son ordre de la part de tous les actionneurs exécutant cet ordre.

Chaque calculateur invalide de façon permanente son ordre pour un groupe d'actionneurs lorsqu'au moins un nombre significatif d'actionneurs parmi un groupe d'actionneurs a détecté une anomalie sur cet ordre (c'est-à-dire lorsque cet ordre a été invalidé à la fois par l'unité 18 et l'unité 19 de l'actionneur). Ce nombre dépend du type de surface commandé.

On entend ici par groupe d'actionneurs l'ensemble des actionneurs qui exécutent le même ordre sur une surface de commande, telle que par exemple, quatre actionneurs associés aux deux gouvernes de profondeur, trois actionneurs associés à la gouverne de direction, etc.

Lorsqu'un calculateur se déclare en panne, soit de lui-même, soit par les actionneurs, il est ignoré de tous les actionneurs et des autres calculateurs.

Chaque actionneur ayant détecté la panne de deux calculateurs primaires exécutant le même logiciel envoie une requête de reconfiguration logicielle à l'un des deux calculateurs primaires restant valides. Le choix du calculateur est prédéfini et arbitraire, de telle sorte que tous les actionneurs ont la même requête.

Le calculateur à reconfigurer procède effectivement à sa reconfiguration lorsqu'il reçoit une requête en reconfiguration cohérente de la part d'un certain nombre d'actionneurs.

Par exemple si les calculateurs 14-1 et 15-1 fonctionnant avec le programme A tombent en panne, une requête est envoyée à l'un des calculateurs 14-2 ou 15-2 (fonctionnant avec le programme B) pour que celui-ci soit reconfiguré et fonctionne avec le programme A de sorte que la loi normale est toujours obtenue par deux calculateurs respectant le principe de la dissimilarité logicielle.

De même si les deux calculateurs 14-2 et 15-2 fonctionnant avec le programme B tombent en panne, une requête est envoyée à l'un des calculateurs 14-1 ou 15-1 (fonctionnant avec le programme A) pour que celui-ci soit reconfiguré et fonctionne avec le programme B.

Le problème ne se pose pas pour le calcul de la loi directe car cette loi peut être calculée par chacun des calculateurs selon trois programmes (A, B ou C) de sorte que même si deux calculateurs fonctionnant avec le même programme tombent en panne, la dissimilarité logicielle est toujours conservée (A et B, A et C ou B et C).

On notera que dans ce type d'architecture, aucune interconnexion entre les calculateurs n'est nécessaire puisque c'est par l'intermédiaire des actionneurs (comportant la logique de comparaison des calculateurs entre eux) que l'invalidation d'un calculateur est déterminée.

De plus, cette architecture permet également un contrôle additionnel des actionneurs à partir des calculateurs. En effet, un calculateur détectant un désaccord entre deux unités 18 et 19 d'un actionneur 13 considère celui-ci en panne et lui envoie une consigne de non-opération.

Cependant, et selon le mécanisme de décision similaire à celui des calculateurs, cet actionneur n'appliquera cette consigne de désactivation que lorsqu'elle est consolidée par les autres calculateurs (poids du vote supérieur ou égal à 2).

On va maintenant décrire un exemple de réseau de communication entre les calculateurs du module 12 et les actionneurs 13 à l'aide de la figure 3.

Ce réseau comporte deux organes d'échange de données 16 et 17.

L'organe 16 (respectivement 17) comporte deux éléments 16-1 et 16-2 (respectivement 17-1 et 17-2), chaque élément comportant un bus AFDX (Avionics Full Duplex switched ethernet) à 100 Mbit/s, situé en baie avionique ou ailleurs dans le fuselage de l'avion et relié à un micro-bus (d'un débit de 10 Mbit/s) situé proche des actionneurs (ces bus ne sont pas illustrés sur la figure). Ces bus ont été développés et standardisés pour répondre aux normes du domaine aéronautique.

Les réseaux AFDX sont basés sur le principe des réseaux commutés, c'est-à-dire que les actionneurs et les calculateurs chargés de l'émission ou de la réception de données s'organisent autour de commutateurs par lesquels transitent ces données.

Ces réseaux réalisent une liaison numérique entre les calculateurs et les actionneurs, le multiplexage des données ainsi obtenu permettant de faire communiquer aisément chaque calculateur avec chaque actionneur (ce qui n'était pas le cas avec le dispositif de l'art antérieur où les liaisons entre les calculateurs et les actionneurs étaient des liaisons point à point analogiques).

Chaque organe 16 et 17 est relié à chaque unité 18 et 19 de chaque actionneur 13, de façon à ce que soit reliée directement par les bus AFDX et micro-bus chaque unité 18 et 19 avec chaque calculateur.

Dans une variante illustrée en figure 4, l'unité 18 de chaque actionneur est uniquement reliée à l'un des ensembles de calculateurs tandis que l'unité 19 est reliée à l'autre des ensembles de calculateurs, avec les unités 18 et 19 qui sont reliées entre elles de sorte que l'unité 18 peut tout de même communiquer avec l'ensemble de calculateurs auquel elle n'est pas reliée directement par l'intermédiaire de l'unité 19 et réciproquement.

En variante, les unités 18 et 19 de chaque actionneur peuvent partager un même média pour communiquer avec le calculateur, en utilisant des CRC (Cyclic Redundancy Check) dits applicatifs, pour signer leurs messages.

Il est également possible d'utiliser d'autres types de bus tels que des bus ARINC (Aeronautical Radio Incorporated) ou tout autre type d'organe de communication permettant un multiplexage numérique, entre les calculateurs et les actionneurs pourvu que ceux-ci soient compatibles avec les normes dans le domaine aéronautique.

Dans une autre variante encore ce ne sont pas les lois normales et directes qui sont implémentées dans les calculateurs mais tout autre type de loi telle que par exemple une loi qui ne serait, contrairement à la loi directe, que partiellement dégradée par rapport à la loi normale (suite à la perte des signaux de capteurs de l'avion par exemple).

On rappellera enfin que le nombre de calculateurs est variable selon les besoins et n'est pas restreint au nombre décrit dans les exemples illustrés en figures 2 à 4.

De nombreuses autres variantes sont possibles en fonction des circonstances, et l'on rappelle à cet égard que l'invention ne se limite pas aux exemples décrits et représentés.

## Revendications

1. Système de commande de vol pour aéronef, comportant :
- au moins un actionneur (13) d'une surface de vol mobile dudit aéronef ;
- un module de commande de vol (12) en communication avec ledit actionneur (13), ledit module comportant au moins un premier et un deuxième calculateur (14-1, 14-2, 14-3, 15-1, 15-2, 15-3), chaque calculateur étant adapté à calculer un ordre de commande établi selon au moins une loi de commande prédéterminée de ladite surface de vol ; ledit actionneur (13) comporte des moyens logiques (18, 19) adaptés à comparer les ordres desdits calculateurs (14-1, 14-2, 14-3, 15-1, 15-2, 15-3) et à déterminer à partir de ces ordres l'action à exécuter sur ladite surface mobile, et en ce que lesdits moyens logiques (18, 19) présentent une architecture à vote, **caractérisé en ce que** ledit premier calculateur (14-1, 14-2, 14-3) appartenant à un premier groupe (14) de calculateurs, ledit deuxième calculateur (15-1, 15-2, 15-3) appartenant à un deuxième groupe (15) de calculateurs et ladite architecture à vote présentant un premier niveau de vote pour chaque dit groupe (14, 15) et un second niveau de vote en sortie des deux dits groupes (14, 15).

2. Système selon la revendication 1, **caractérisé en ce que** les moyens logiques (18, 19) dudit actionneur (13) sont également adaptés, pour chaque calculateur, à renvoyer ou non un message de défaillance en fonction du résultat de ladite comparaison des ordres.

3. Système selon la revendication 2, **caractérisé en ce qu'**il comporte une pluralité d'actionneurs (13) et **en ce que** lesdits calculateurs (14-1, 14-2, 14-3, 15-1, 15-2, 15-3) sont adaptés à se désactiver lorsqu'un nombre d'actionneurs (13) supérieur à un nombre prédéterminé renvoie ledit message de défaillance.

4. Système selon l'une quelconque des revendications 1 à 3, **caractérisé en ce que** lesdits moyens logiques (18, 19) de chaque actionneur (13) sont également adaptés, lorsque tous les calculateurs encore opérationnels calculent ledit ordre de commande selon un même programme, à envoyer une requête en reconfiguration logicielle vers l'un des calculateurs encore opérationnels pour qu'il fonctionne selon un programme différent de celui des autres calculateurs encore opérationnels.

5. Système selon l'une quelconque des revendications 1 à 4, **caractérisé en ce que** chaque actionneur (13) comporte une unité de commande (18) et une unité de surveillance (19) de ladite unité de commande (18).

6. Système selon la revendication 5, **caractérisé en ce que** chaque unité (18, 19) est reliée audit premier calculateur et audit deuxième calculateur.

7. Système selon la revendication 5, **caractérisé en ce que** l'une des unités (18) est uniquement reliée audit premier calculateur et l'autre unité (19) est uniquement reliée audit deuxième calculateur, lesdites unités de commande (18) et de surveillance (19) étant également reliées entre elles.

8. Aéronef équipé d'un système selon l'une quelconque des revendications 1 à 7.

## Patentansprüche

1. System zur Flugsteuerung für Flugzeug, das Folgendes umfasst:
- wenigstens einen Aktor (13) für eine bewegliche Flugoberfläche des Flugzeugs;
- ein Flugsteuermodul (12) in Kommunikation mit dem Aktor (13), wobei das Modul wenigstens einen ersten und einen zweiten Rechner (14-1, 14-2, 14-3, 15-1, 15-2, 15-3) enthält, wobei jeder Rechner dafür ausgelegt ist, eine Steuerreihenfolge zu berechnen, die gemäß wenigstens einem vorgegebenen Gesetz für die Steuerung der Flugoberfläche gebildet wird; wobei der Aktor (13) Logikmittel (18, 19) enthält, die dafür ausgelegt sind, die Reihenfolgen der Rechner (14-1, 14-2, 14-3, 15-1, 15-2, 15-3) zu vergleichen und anhand dieser Reihenfolgen die an der beweglichen Oberfläche auszuführende Aktion zu bestimmen, und wobei die Logikmittel (18, 19) eine Wahlarchitektur aufweisen, **dadurch gekennzeichnet, dass** der erste Rechner (14-1, 14-2, 14-3) zu einer ersten Rechnergruppe (14) gehört, der zweite Rechner (15-1, 15-2, 15-3) zu einer zweiten Rechnergruppe (15) gehört und die Wahlarchitektur für jede Gruppe (14, 15) ein erstes Wahlniveau und am Ausgang der zwei Gruppen (14, 15) ein zweites Wahlniveau aufweist.

2. System nach Anspruch 1, **dadurch gekennzeichnet, dass** die Logikmittel (18, 19) des Aktors (13) außerdem dafür ausgelegt sind, für jeden Rechner eine Störungsnachricht als Funktion des Ergebnisses des Vergleichs der Reihenfolgen zu schicken oder nicht zu schicken.

3. System nach Anspruch 2, **dadurch gekennzeichnet, dass** es mehrere Aktoren (13) umfasst und dass die Rechner (14-1, 14-2, 14-3, 15-1, 15-2, 15-3) dafür ausgelegt sind, sich zu deaktivieren, wenn eine Anzahl von Aktoren (13), die größer als eine vorgegebene Anzahl ist, die Störungsnachricht schickt.

4. System nach einem der Ansprüche 1 bis 3, **dadurch gekennzeichnet, dass** die Logikmittel (18, 19) jedes Aktors (13) außerdem dafür ausgelegt sind, dann, wenn sämtliche noch in Betrieb befindlichen Rechner die Steuerreihenfolge gemäß demselben Programm berechnen, eine Software-Neukonfigurationsanforderung zu einem der noch in Betrieb befindlichen Rechner zu schicken, damit er gemäß einem Programm arbeitet, das von jenem der anderen noch in Betrieb befindlichen Rechner verschieden ist.

5. System nach einem der Ansprüche 1 bis 4, **dadurch gekennzeichnet, dass** jeder Aktor (13) eine Steuereinheit (18) und eine Überwachungseinheit (19) für die Steuereinheit (18) umfasst.

6. System nach Anspruch 5, **dadurch gekennzeichnet, dass** jede Einheit (18, 19) mit dem ersten Rechner und mit dem zweiten Rechner verbunden ist.

7. System nach Anspruch 5, **dadurch gekennzeichnet, dass** eine der Einheiten (18) nur mit dem ersten Rechner verbunden ist und die andere Einheit (19) nur mit dem zweiten Rechner verbunden ist, wobei die Steuereinheit (18) und die Überwachungseinheit (19) auch miteinander verbunden sind.

8. Flugzeug, das mit einem System nach einem der Ansprüche 1 bis 7 ausgerüstet ist.

## Claims

1. A flight control system for an aircraft, comprising:
- at least one actuator (13) of a mobile flight surface of the said aircraft;
- a flight control module (12) in communication with the said actuator (13), said module comprising at least a first and a second computer (14-1, 14-2, 14-3, 15-1, 15-2, 15-3), each computer being configured to calculate a control command established according to at least one predetermined command law of the flight surface, said actuator (13) comprising logic means (18, 19) configured to compare commands from said computers (14-1, 14-2, 14-3, 15-1, 15-2, 15-3) and to determine on the basis of these commands an action to be executed on the mobile surface, and the logic means includes a voting architecture, **characterized in that** the first computer (14-1, 14-2, 14-3) belongs to a first group (14) of computers, said second computer (15-1, 15-2, 15-3) belongs to a second group (15) of computers and said voting architecture has a first voting level for each of said groups (14, 15) and a second voting level at outputs said two groups.

2. System according to claim 1, **characterized in that** the logic means (18, 19) of said actuator (13) is further configured, for each computer, to send back or not send back, a failure message depending on the result of the comparison of the commands.

3. System according to claim 2, **characterized in that** it further comprises a plurality of actuators (13), and **in that** said computers (14-1, 14-2, 14-3, 15-1, 15-2, 15-3) are configured to disabled themselves when a number of actuators (13) exceeding a predetermined number send back the failure message.

4. System according to any one claim 1 to 3, **characterized in that** said logic means (18, 19) of each actuator (13) is configured to, when all computers that are not disabled calculate said control command according to a same program, send a software reconfiguration request to one of the computers that are not disabled to cause it to function according to a program different from a program of the other of the computer that are not disabled.

5. System according to any one claim 1 to 4, **characterized in that** each actuator (13) comprises a control unit (18) and a monitoring unit (19) of said control unit (18).

6. System according to claim 5, **characterized in that** each unit (18, 19) is connected to said first computer and to said second computer.

7. System according to claim 5, **characterized in that** one of the units (18) is only connected to said first computer and the other unit (19) is only connected to the second computer, said command unit and monitoring unit also being connected to one another.

8. An aircraft equipped with a system according to any one of claims 1 to 7.
